**Europäisches Patentamt**

**European Patent Office**

**Office européen des brevets**

(19)

(11) Veröffentlichungsnummer: **0 244 464**
**B1**

(12) **EUROPÄISCHE PATENTSCHRIFT**

(45) Veröffentlichungstag der Patentschrift: **11.04.90**

(51) Int. Cl.⁵: **G 03 B 27/10**

(21) Anmeldenummer: **86906760.3**

(22) Anmeldetag: **27.10.86**

(86) Internationale Anmeldenummer:
**PCT/DE86/00433**

(87) Internationale Veröffentlichungsnummer:
**WO 87/02788 07.05.87 Gazette 87/10**

(54) **VORRICHTUNG ZUM EINBRINGEN VON KOPIER- UND BELICHTUNGSGUTSCHICHTUNGEN IN EINE EINRICHTUNG ZUM KONTINUIERLICHEN BELICHTEN DIESES GUTES.**

(30) Priorität: **26.10.85 DE 3538192**

(43) Veröffentlichungstag der Anmeldung:
**11.11.87 Patentblatt 87/46**

(45) Bekanntmachung des Hinweises auf die
Patenterteilung:
**11.04.90 Patentblatt 90/15**

(84) Benannte Vertragsstaaten:
**CH DE FR GB LI NL SE**

(56) Entgegenhaltungen:
**DE-A-3 220 637**
**GB-A-1 162 768**
**US-A-3 814 519**
**US-A-4 281 922**
**US-A-4 423 955**

(73) Patentinhaber: **Haus, Hans**
**Hahlgartenweg 7**
**D-6250 Limburg (DE)**

(72) Erfinder: **Haus, Hans**
**Hahlgartenweg 7**
**D-6250 Limburg (DE)**

(74) Vertreter: **Hemmerich, Friedrich Werner et al**
**Patentanwälte HEMMERICH-MÜLLER-GROSSE-**
**POLLMEIER-MEY Eduard-Schloemann-Strasse**
**47**
**D-4000 Düsseldorf 1 (DE)**

## Beschreibung

Die Erfindung betrifft eine Vorrichtung zum Einbringen von Kopier- und Belichtungsgutschichtungen in eine Einrichtung zum kontinuierlichen Belichten dieses Gutes, bei der die Schichtungen durch einen von einem Treibwalzenpaar gebildeten Eintrittsspalt mittels eines Riemenförderers durch einen Belichtungsraum mit lichtdurchlässiger Scheibe bewegt einem weiteren, hinter dem Belichtungsraum angeordneten Treibwalzenpaar und von diesem einer die Schichtung voneinander trennenden Trenneinrichtung zugeführt wird, und die Schichtungen aufeinander ausrichtbare Positionierlochungen aufweisen, in die mittels einer Hubeinrichtung Passerstifte ein- und wieder herausbringbar sind.

Bei einer bekannten Vorrichtung dieser Art (DE-A-32 20 637) sind die Passerstifte vor dem hier durch eine Treibwalze und eine Umlenkrolle des Riemenförderers gebildeten Eintrittsspalt auf einem Tragschlitten angeordnet, der in der Bewegungsrichtung der Schichtungen gegen diesen Eintrittsspalt geradlinig hin- und zurückbewegbar ist und eine Auflagefläche für die Schichtungen aufweist. Auf dem Tragschlitten ist eine, die auf der Auflagefläche aufliegende Schichtung unterfassende Hubeinrichtung angeordnet, mit der die Schichtung über die aufstehende Höhe der Passerstifte angehoben werden kann.

Die Belichtungsgutschichtung, die bpsw. eine Druckplatte enthält, wird bei dieser Vorrichtung von Hand auf die Auflagefläche des Tragschlittens so aufgelegt, daß die Passerstifte in die Positionierlochungen eingebracht und die einzelnen Schichten der Schichtung auf diese Weise lagefixiert werden. Der Tragschlitten wird dann mit der auf seiner Auflagefläche liegenden Schichtung in Richtung auf den Eintrittsspalt bewegt, bis die Treibwalzen des Treibwalzenpaares, das den Eintrittsspalt bildet, die Schichtung erfassen. Nachdem das Treibwalzenpaar die Schichtung über eine vorgegebene Strecke, bspw. 5 bis 10 cm bewegt hat, wird die Schichtung mit Hilfe der sie unterfassenden Hubeinrichtung soweit angehoben, daß die Passerstifte sich nicht mehr innerhalb der Positionierlochungen befinden und die Schichtung dann von den Treibwalzen weiter in Richtung auf den Belichtungsraum bewegt werden kann, während der Tragschlitten in seine Ausgangsposition zurückgeschoben wird, um für das Einbringen der nächsten Schichtung vorbereitet zu sein.

Der Nachteil dieser Vorrichtung besteht darin, daß die Lagefixierung der Teile der Schichtung bei dieser Vorrichtung im Bereich der rückwärtigen, d.h. dem Eintrittsspalt abgewandten Kante erfolgen muß, weil es nur so möglich ist, die Schichtung mit Hilfe der Hubeinrichtung anzuheben und, nachdem die Vorderkante der Schichtung von dem Treibwalzenpaar erfaßt worden ist, aus dem Bereich der Passerstifte herauszubringen. Die Lagefixierung im Bereich der rückwärtigen Kante bringt es mit sich, daß sich beim Eintritt der Vorderkante in den Eintrittsspalt leichte Querverschiebungen der Teile der Schichtung gegeneinander ergeben und damit die für das Kopieren erforderliche Maßgenauigkeit nicht gewährleistet ist. Besonders schwierig gestaltet sich das Arbeiten mit der bekannten Vorrichtung dann, wenn die zu kopierenden Originale leichte Wellungen ihrer Oberfläche aufweisen. Das Arbeiten mit der Vorrichtung erfordert deshalb Erfahrung und Sorgfalt beim Einlegen der Schichtung und dem Vorschub des Tragschlittens, und der damit verbundene größere Zeitaufwand beeinträchtigt die Durchsatzleistung. Praktisch die gleichen Schwierigkeiten ergeben sich mit einer anderen Ausbildungsform der Vorrichtung, bei der die Passerstifte auf dem Tragschlitten mit Hubeinrichtungen verbunden sind, die es gestatten, die Stifte unter die Auflagefläche für die Schichtungen abzusenken. Die Schichtungen müssen bei dieser Ausbildungsform zwar nicht über die Aufstehhöhe der Passerstifte angehoben werden; die Anordnung der Passerstifte ist aber auch hier nur im rückwärtigen, in besonderen Fällen noch im mittleren Bereich der Länge der Schichtung möglich, da der Fahrschlitten noch einen Bewegungsraum in Richtung auf den Eintrittsspalt benötigt.

Der Erfindung liegt die Aufgabe zugrunde, diese bekannte Vorrichtung so umzugestalten und zu verbessern, daß die obengenannten Nachteile vermieden werden und die Durchsatzleistung gesteigert wird.

Diese Aufgabe wird dadurch gelöst, daß die Passerstifte mit ihren Hubeinrichtungen in dem Bewegungsbereich der Schichtung zwischen dem den Eintrittsspalt bildenden Treibwalzenpaar und dem Belichtungsraum ortsfest angeordnet sind, daß eine der Treibwalzen des Treibwalzenpaares von der anderen Treibwalze weghebbar ausgebildet und die andere ortsfest gelagert ist. Die weghebbare Treibwalze kann dabei in einem, um eine quer zur Bewegungsrichtung des Belichtungsgutes liegende Achse schwenkbaren Träger lagern und an diesem Träger kann eine Andruckplatte für die Schichtung angeordnet sein. Zwischen der Andruckplatte und dem Träger können Federelemente angeordnet sein oder die Andruckplatte kann als Federplatte ausgebildet werden. In der Schwenkbahn des Trägers der Treibwalze kann erfindungsgemäß ein Anstoßschaltelement für den Hubantrieb der Passerstifte angeordnet werden. Weitere zweckmäßige Ausbildungen der Vorrichtung sind in den Unteransprüchen angegeben.

Die Erfindung wird anhand des in der Zeichnung dargestellten Ausführungsbeispiels näher erläutert. In der Zeichnung zeigen

Fig 1 die Vorrichtung im Längsschnitt von der Seite gesehen in schematischer Darstellung und

Fig. 2 eine Einzelheit, ebenfalls im Längsschnitt von der Seite gesehen in vergrößertem Maßstab.

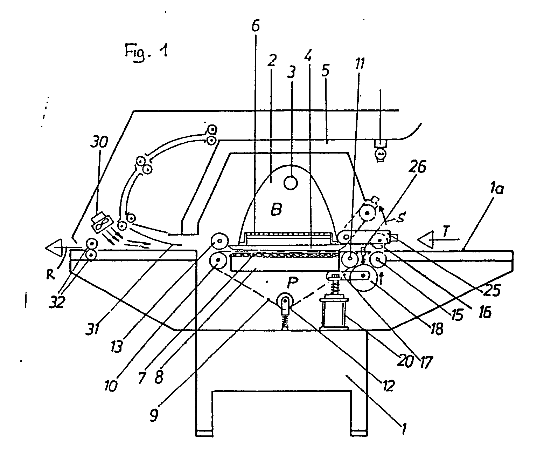

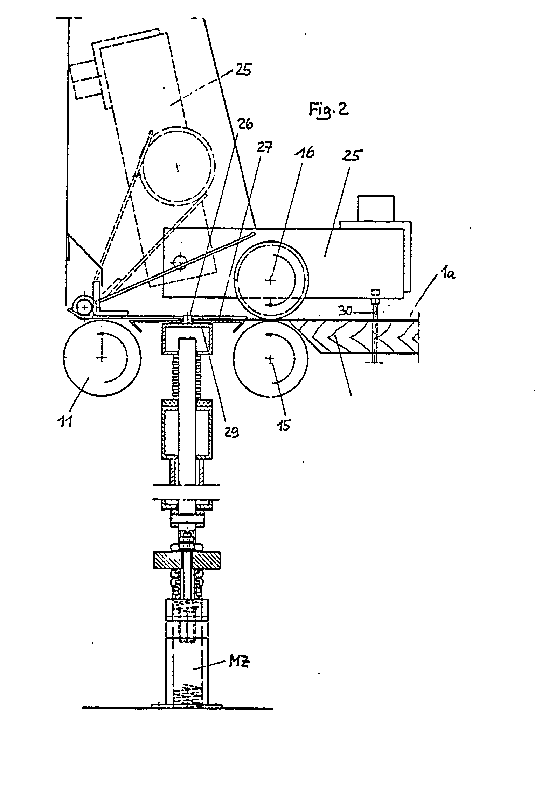

Wie aus Fig 1 zu ersehen, besteht die Vorrichtung aus einem Tragtisch 1, über dessen Auflagefläche 1a eine Lichtabdeckhaube 2 mit der Lichtquelle 3 und der lichtdurchlässigen Scheibe 4 in einem Tragrahmen 5 angeordnet sind. Über der lichtdurchlässigen Scheibe 4 ist in der Haube 2 noch ein, nicht zur Erfindung gehöriges Gitter 6 zur Erzeugung gerichteten Lichts angeordnet. Unterhalb der lichtdurchlässigen Scheibe 4 und der Ebene der Auflagefläche 1a ist eine mit elastischem Werkstoff 7 überzogene in Richtung des gezeichneten Pfeils p anhebbare Andruckstützplatte 8 angeordnet. Zwischen der lichtdurchlässigen Scheibe 4 und der Andruckstützplatte 8 wird der Endlosriemenförderer 9 bewegt; er weist vor und hinter dem durch die Haube 2 und die lichtdurchlässige Scheibe 4 gebildeten Belichtungsraum B Umlenkrollen 10 und 11 sowie eine Spannrolle 12 auf. Die in Transportrichtung T hinter der lichtdurchlässigen Scheibe 4 befindliche Umlenkrolle 10 bildet mit einer auf ihr aufliegenden Rolle 13 den Austrittsspalt und wirkt, reibangetrieben durch die Rolle 10 mit dieser als Treibwalzenpaar. Vor dem Belichtungsraum B und vor der Umlenkrolle 11 sind die Passerstifte 26 angeordnet, die — auf hier nicht dargestellte Weise — aus der gezeichneten, aus der Auflagefläche 1a herausstehenden Position in eine Position unterhalb dieser Auflagefläche 1a abgesenkt werden können. Diesen Passerstiften 26 ist in Transportrichtung T ein weiteres Treibwalzenpaar 15, 16 vorgeordnet. Die untere Treibwalze 15 des Treibwalzenpaares ist ortsfest unterhalb der Auflagefläche 1a gelagert und wird über eine in einem Wipphebel 17 gelagerte Reibzwischenrolle 18 in der gezeichneten Stellung von der Umlenkrolle 11 des Riemenförderers 9 angetrieben; sie kann durch Hubmagneten 20, der die Reibzwischenrolle in und außer Wirkungslage bringt, vom Antrieb abgeschaltet werden. Die obere Treibwalze 16 lagert (vgl. auch Fig. 2) in einem Träger 25, der in Richtung des eingezeichneten Pfeils S in die in unterbrochenen Linien dargestellte Position schwenkbar ist, wobei die Treibwalze 16 von der Auflagefläche 1a weggeschwenkt wird. Mit dem Träger 25 ist eine Andruckplatte 27 verbunden, die bei auf der Auflagefläche 1a aufliegender Treibwalze 16 ebenfalls auf dieser Auflagefläche 1a zur Auflage gelangt. Die Passerstifte 26 sind auf einer Quertraverse 29 so angeordnet, daß sie in die an beiden Längsseiten der nicht dargestellten Schichtung vorgesehenen Positionierlochungen einbringbar sind. Die Traverse 29 wird von einer nicht zur Erfindung gehörigen Magnetzugeinrichtung MZ getragen. Aus der Auflagefläche 1a ragt der Kontaktgeber 30 als Anstoßschaltelement einer nicht dargestellten Schalteinrichtung heraus, der von dem Träger 25 aus der in unterbrochenen Linien dargestellten Stellung in die in vollen Linien wiedergegebene Stellung eingebracht wird, wenn der Träger 25 die gezeichnete Position (in vollen Linien) erreicht hat und die Treibwalze 16 auf der Auflagefläche 1a bzw. der Schichtung aufliegt.

Die Vorrichtung arbeitet in der Weise, daß bei hochgeschwenktem Träger 25 und in oberer Position befindlichen Passerstiften 26 die Schichtung auf die Auflagefläche 1a so aufgelegt wird, daß sich die Passerstifte 26 in den Positionierlochungen befinden. Anschließend wird der Träger 25 nach unten in die in vollen Linien dargestellte Position geschwenkt, wobei sich die Andruckplatte 27 und die Treibwalze 16 auf die Schichtung auflegen und damit die die Schichtung bildenden Teile zueinander lagefixieren. Anschließend werden die Passerstifte 26 nach unten aus den Positionierlochungen heraus unter die Auflagefläche 1a bewegt und erst dann durch Betätigung des Hubmagneten 20 über die Reibzwischenrolle 18 die untere Treibwalze 15 in Umdrehung versetzt; sie transportiert dann zusammen mit der aufliegenden Treibwalze 16 die von der Andruckplatte 27 gegen die Auflagefläche 1a gedrückte Schichtung in den Belichtungsraum B unter die lichtdurchlässige Scheibe 4. Eine Querverschiebung der Teile der Schichtung gegeneinander ist während dieses Transportschrittes praktisch ausgeschlossen, da die Schichtung, bevor sie das Treibwalzenpaar 15, 16 verläßt, bereits von dem Riemenförderer 9 erfaßt worden ist und dabei zwischen Andruckstützplatte 8 und lichtdurchlässiger Scheibe 4 so geführt wird, daß Querverschiebungen der Schichtungsteile nicht mehr möglich sind. Der Antrieb der Treibwalzen 15, 16 über die Reibzwischenrolle 18 durch die Umlenkrolle 11 des Riemenförderers 7 stellt sicher, daß die Transportbewegung synchron erfolgt.

Die Treibwalzen 15, 16 bewirken nicht nur, daß die Teile der Schichtung gegen Querverschiebung gesichert in Richtung auf den Belichtungsraum B transportiert werden, sondern walzen auch etwaige Luftblasen, Falten oder andere Unebenheiten aus der Vorlage (Originalfilm) heraus, bevor diese in den Belichtungsraum B gelangen.

Die einzelnen Bewegungsabläufe innerhalb der Vorrichtung werden zweckmäßig mit Hilfe von nicht zur Erfindung gehörigen Schaltelementen, wie Mikroschalter, elektronische Schaltverzögerungseinrichtungen u.dgl. gesteuert, so daß erst die Andruckplatte 27 dann die Treibwalze 16 in Verbindung mit der Treibwalze 15 die Schichtung lagefixiert und anschließend die Passerstifte 26 aus den Positionierlochungen herausbewegt werden und dann der Hubmagnet 20 betätigt wird, der die Antriebsbewegung der Treibwalze 15 veranlaßt. Der die Treibwalze 16 tragende Träger 25 kann dabei automatisch in die obere Schwenklage gebracht werden, sobald das rückwärtige Ende der Schichtung in den Belichtungsraum B eintritt, damit die nächste Schichtung möglichst schnell aufgelegt und in der beschriebenen Weise weitertransportiert werden kann.

Die Trennung der Teile der den Belichtungsraum B verlassenden Schichtung, z.B. der Druckplatte von der Vorlage erfolgt mit Hilfe einer ebenfalls nicht zur Erfindung gehörigen, hier mit einer Blasvorrichtung 30 ausgestatteten Trenneinrichtung (vgl. Fig. 1), deren Blasstrahl die Vorderkante der aus dem durch die Umlenkrolle 10 und die Walze 13 gebildeten Austrittsspalt verlassenden Schichtung beaufschlagt, mit der Wirkung, daß die Vorlage nach oben abgelenkt in eine Umlenkführung 31 gelangt und die Platte von einem Treibwalzenpaar 32 erfaßt und in Richtung des Pfeils R abtransportiert wird.

## Patentansprüche

1. Vorrichtung zum Einbringen von Kopier- und Belichtungsgutschichten in eine Einrichtung zum kontinuierlichen Belichten dieses Gutes, bei der die Schichtungen durch einen von einem Treibwalzenpaar gebildeten Eintrittsspalt mittels eines Riemenförderers durch einen Belichtungsraum mit lichtdurchlässiger Scheibe bewegt einem weiteren, hinter dem Belichtungsraum angeordneten Treibwalzenpaar und von diesem einer die Schichtungen voneinander trennenden Trenneinrichtung zugeführt wird und die Schichtungen aufeinander ausrichtbare Positionierlochungen aufweisen, in die mittels einer Hubeinrichtung Passerstifte ein- und wieder herausbringbar sind, dadurch gekennzeichnet, daß die Passerstifte (26) mit ihren Hubeinrichtungen (MZ) zwischen dem den Eintrittsspalt bildenden Treibwalzenpaar (15, 16) und dem Belichtungsraum (B) ortsfest angeordnet sind, daß eine der Treibwalzen (16) des Treibwalzenpaares (15, 16) von der anderen Treibwalze (15) weghebbar ausgebildet und die andere (15) ortsfest gelagert ist.

2. Vorrichtung nach Anspruch 1, dadurch gekennzeichnet, daß die weghebbare Treibwalze (16) in einem, um eine quer zur Transportrichtung der Schichtungen liegende Achse schwenkbaren Träger (25) lagert.

3. Vorrichtung nach Anspruch 2, gekennzeichnet durch eine an dem Träger (25) angeordnete, auf die Schichtung auflegbare Andruckplatte (27).

4. Vorrichtung nach Anspruch 3, gekennzeichnet durch zwischen dem Träger (25) und der Andruckplatte (27) angeordnete Federelemente.

5. Vorrichtung nach Anspruch 3, dadurch gekennzeichnet, daß die Andruckplatte (27) als Federplatte ausgebildet ist.

6. Vorrichtung nach einem oder mehreren der Ansprüche 2 bis 5, gekennzeichnet durch ein in der Schwenkbahn des Trägers (25) der Treibwalze (16) angeordnetes Anstoßschaltelement (30) für den Hubantrieb (MZ) der Passerstifte (26).

7. Vorrichtung nach einem oder mehreren der Ansprüche 1 bis 6 mit einem Riemenförderer, dessen eine Umlenkrolle vor der lichtdurchlässigen Scheibe des Belichtungsraums angeordnet ist, gekennzeichnet durch eine zwischen einer Treibwalze (15) des den Eintrittsspalt bildenden Treibwalzenpaares (15, 16) und einer Umlenkrolle (11) des Riemenförderers (9) angeordnete Reibzwischenrolle (18), die mittels eines Hubmagneten (20) in und außer Antriebsübertragungsstellung bringbar ist.

## Revendications

1. Dispositif pour l'introduction de couches de produit de copiage et d'exposition dans un dispositif pour impressionner ce produit en continu, dans lequel les couches sont entraînées à travers une fente d'entrée formée par une paire de rouleaux d'entraînement au moyen d'un transporteur à courroie, en passant à travers une enceinte d'exposition à vitre transparente pour la lumière, puis dans une autre paire de cylindres d'entraînement disposée derrière l'enceinte d'exposition et, ensuite, dans un dispositif de séparation qui sépare les couches les unes des autres, tandis que les couches présentent des perforations de positionnement pouvant être alignées les unes par rapport aux autres, dans lesquelles des broches de repère peuvent être insérées et retirées au moyen d'un dispositif de levage, caractérisé en ce que les broches de repère (26) sont disposées de manière fixe avec leur dispositif de levage (MZ) entre la paire de cylindres d'entraînement (15, 16) constituant la fente d'entrée et l'enceinte d'exposition (B), et en ce que l'un des cylindres d'entraînement (16) de la paire de cylindres d'entraînement (15, 16) est conçu pour pouvoir être écarté de l'autre cylindre d'entraînement (15), tandis que celui-ci (15) est supporté de manière fixe.

2. Dispositif selon la revendication 1, caractérisé en ce que le cylindre d'entraînement (16) pouvant être écarté repose sur un support (25) pouvant pivoter autour d'un axe disposé transversalement par rapport à la direction de transport des couches.

3. Dispositif selon la revendication 2, caractérisé par une plaque de compression (27) disposée sur le support (25) et pouvant être appliquée sur la couche.

4. Dispositif selon la revendication 3, caractérisé par des éléments élastiques disposés entre le support (25) et la plaque de compression (27).

5. Dispositif selon la revendication 3, caractérisé en ce que la plaque de compression (27) est constituée d'une plaque élastique.

6. Dispositif selon une ou plusieurs des revendications 2 à 5, caractérisé par un élément de commutation de butée (30) disposé dans le trajet de pivotement du support (25) du cylindre d'entraînement (16) pour commander la levée (MZ) des broches de repère (26).

7. Dispositif selon une ou plusieurs des revendications 1 à 6, avec un transporteur à courroie dont un rouleau de renvoi est disposé devant la vitre transparente à la lumière de l'enceinte d'exposition, caractérisé par un rouleau intermédiaire à frottement (18) disposé entre un cylindre d'entraînement (15) de la paire de cylindres d'entraînement (15, 16) constituant la fente d'entrée et un rouleau de renvoi (11) du transporteur à courroie (9), ce rouleau (18) pouvant être amené ou non en position de transmission de l'entraînement au moyen d'un aimant de levage (20).

## Claims

1. Device for inserting copy and exposure material layers into a device for the continual exposure of this material, in which sets of layers are transported through an input gap, formed by a pair of drive rolls by means of a belt-conveyor through an exposure space with a transparent disc, then fed to a further pair of drive rolls, located behind the exposure space and brought from this to a separating unit, separating the layers of the set from one another, whereby the layers have positioning holes, which can be positioned over one another, into which locating pins can be inserted and withdrawn with the help of a lifting device, characterized by the fact that the locating pins (26) together with their lifting devices (MZ) are fixed between the pair of drive rolls (15, 16) forming the input gap, and the exposure space (B), and that one of the drive rolls (16) of the pair of drive rolls (15, 16) is designed as to be liftable from the other drive roll (15) and this other one (15) is arranged at a fixed location.

2. Device according to claim 1, characterized by the fact that the liftable drive roll (16) is supported by a frame (25) rotable about a shaft arranged transvers to the direction of transport of the layer sets.

3. Device according to claim 2, characterized by a pressing plate (27) arranged on the frame (25) and to be laid on the layer set.

4. Device according to claim 3, characterized by spring means arranged between the pressing plate (27) and the frame (25).

5. Device according to claim 3, characterized by the fact that the pressing plate (27) is designed as a spring plate.

6. Device according to one or more of the claims 2 to 5, characterized by a cam-switch (30) controlling the lifting device (MZ) of the locating pins (26) positioned in the way of movement of the frame (25).

7. Device according to one or more of the claims 1 to 6, comprising a belt conveyor, one turn-back-roll of which is arranged in front of the transparent disc of the exposure space, characterized by an in-between-friction-roll (18) arranged between one of the drive rolls (15) of the pair of drive rolls (15, 16) forming the input gap, and one of the turn-back-rolls (11) of the belt conveyor (9) which can be brought into and out of a drive-transmitting-position with the help of a lifting magnet (20).

Fig. 1

Fig. 2